# EUROPÄISCHE PATENTSCHRIFT

(11) **EP 3 924 271 B1**
(45) Veröffentlichungstag und Bekanntmachung des Hinweises auf die Patenterteilung: **05.04.2023**
(21) Anmeldenummer: 20705179.8
(22) Anmeldetag: 13.02.2020
(51) Int. Cl.: B65D 85/804, A47J 31/06

(54) **SYSTEM ZUR ZUBEREITUNG EINES GETRÄNKS AUS EINER PORTIONSKAPSEL**
SYSTEM FOR PREPARING A BEVERAGE FROM A SINGLE-SERVE CAPSULE
SYSTÈME SERVANT À PRÉPARER UNE BOISSON À PARTIR D'UNE CAPSULE

(30) Priorität: 13.02.2019 DE 102019201904; 23.05.2019 DE 102019207557
(43) Veröffentlichungstag der Anmeldung: 22.12.2021
(73) Patentinhaber: GCS German Capsule Solution GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Loock, Jan Pieter
(86) Internationale Anmeldenummer: PCT/EP2020/053678
(87) Internationale Veröffentlichungsnummer: WO 2020/165303

(56) Entgegenhaltungen:
- WO-A1-2016/041596
- WO-A1-2016/075319
- WO-A1-2018/185058
- WO-A2-2019/149875

## Beschreibung

### Stand der Technik

Die vorliegende Erfindung geht aus von einer Portionskapsel (1) zur Zubereitung eines Getränks in einer Getränkeherstellungsmaschine, wobei die Portionskapsel (1) ein Basiselement (2) mit einem Hohlraum (3) zum Aufnehmen eines Getränkerohmaterials und einen den Hohlraum (3) verschließenden Kapseldeckel (4) aufweist, wobei das Basiselement (2) einen Kapselboden, einen umlaufenden Flansch und eine sich zwischen dem Kapselboden und dem umlaufenden Flansch erstreckende Kapselwandung umfasst, wobei der Kapseldeckel (4) an einer Siegelfläche am Flansch (7) befestigt ist, wobei der Flansch an seinem äußeren freien Ende einen umlaufenden Wulst aufweist, wobei an dem Flansch (7) ein Dichtelement in Form einer vom Kapseldeckel weg weisenden Dichtsicke vorgesehen ist, wobei sich auf der Seite des Kapseldeckels zwischen dem Wulst und der Dichtsicke eine Siegelebene, an welchem der Kapseldeckel festgesiegelt ist, auf dem Flansch erstreckt und wobei die Dichtsicke eine innere Flanke auf Seiten der Kapselwandung und eine äußere Flanke auf Seiten des Wulsts umfasst.

Solche Portionskapseln sind aus dem Stand der Technik bekannt. Beispielsweise offenbart die Druckschrift WO 2016 / 186 488 A1 eine solche gattungsgemäße Portionskapsel. Diese Portionskapsel ist dazu vorgesehen, in eine Brühkammer eingelegt zu werden, in welcher der Kapselboden perforiert wird, um Brühflüssigkeit in Form heißen Wassers unter Druck in den Hohlraum einzuleiten. Hierdurch erhöht sich der Druck innerhalb der Portionskapsel, wodurch der Kapseldeckel gegen eine Relief- oder Pyramidenplatte in der Brühkammer gedrückt wird und bei Erreichen eines vorbestimmten Druckes an den Kontaktstellen perforiert wird. Das durch Wechselwirkung zwischen dem eingeleiteten Wasser mit dem Getränkerohmaterial, insbesondere gerösteter und gemahlener Kaffee, entstandene Getränk verlässt sodann durch diese Perforationsstellen in der Deckelfolie die Kapsel.

Alle solche Portionskapseln haben gemein, dass eine hinreichende Abdichtung zwischen der Brühkammer und der Portionskapsel im Bereich des Kapselflansches notwendig ist, damit das Wasser innerhalb der Brühkammer durch das Bett aus Getränkerohmaterial zur Bildung des Getränks fließt und nicht außerhalb der Portionskapsel, also zwischen einer Wandung der Brühkammer und der Außenseite der Kapselwandung, am Getränkerohmaterial vorbeifließt.

Dafür weisen diese Arten von Portionskapseln im Bereich ihres Flansches ein Dichtelement auf, welches in der Brühkammer gegen ein Brühkammerelement abdichtet. Hierbei ist es wünschenswert, dass das Dichtelement aus dem gleichen Material wie der Kapselkörper (auch als Basiselement bezeichnet) besteht, um die Fertigungskosten für die Portionskapsel gering zu halten und die Entsorgung bzw. Wiederverwertung bereits verwendeter Portionskapseln zu begünstigen.

In Figur 4H der Druckschrift WO 2016/ 186 488 A1 wird eine eingeprägte Dichtsicke als Dichtelement im Flanschbereich der Portionskapsel offenbart, die eine senkrechte äußere Flanke und eine geneigte innere Flanke aufweist. Das Ziel dieser Anmeldung besteht darin, die Dichtwirkung zu verbessern. Der Kerngedanke besteht hierbei darin, eine möglichst leicht deformierbare Dichtsicke zu verwenden, welche beim Schließen der Brühkammer unter dem Druck des Brühkammerelements plastisch deformiert wird und sich somit an die Kontur des Brühkammerelements zur Verbesserung der Dichtwirkung anschmiegt. Um diese Deformation zu begünstigen, soll die innere Flanke einen Winkel von 20 bis 60 Grad und vorzugsweise von 30 bis 50 Grad gegenüber der Flanschebene aufweisen. Die innere Flanke verläuft also relativ flach, um eine leichte Deformierbarkeit zu gewährleisten.

Eine ähnliche Portionskapsel ist aus der Druckschrift WO 2016 / 041 596 A1 bekannt. Auch hier weist die Portionskapsel in ihrem Flansch eine eingeprägte Dichtsicke auf. Auch hier soll die Dichtwirkung zwischen der Dichtsicke und dem Brühkammerelement durch eine einfache Deformation der Dichtsicke erzielt werden, weswegen die innere Flanke der Dichtsicke wiederum einen möglichst flachen Winkel aufweisen soll, der besonders bevorzugt weniger als 50 Grad zur Flanschebene aufweist.

Eine weitere Portionskapsel mit einem umlaufenden Dichtelement kennt der Fachmann aus der Druckschrift EP 2 872 421 A1. Bei dieser Lösung sollen beide Flanken des Dichtelements einen Winkel aufweisen, wobei die innere Flanke erneut einen möglichst flachen Winkel zwischen 40 und 80 Grad zur Flanschebene aufweisen soll. Es wird sogar explizit offenbart, dass ab einem Winkel von 80 Grad die Flanke "zu vertikal" werden würde, um noch eine Abdichtung zwischen Brühkammerelement und Flansch erreichen zu können, weil auch dieses Dichtelement darauf basiert, dass es durch das Brühkammerelement deformiert wird (um 20 bis 30 %).

Die vorgenannten Portionskapseln haben allesamt gemein, dass die Dichtwirkung ihrer Dichtelemente jeweils auf einer Deformation ihrer selbst basieren. Hierfür werden innere Flanken mit einem möglichst flachen Winkel verwendet, damit das Brühkammerelement beim Schließen der Brühkammer auf die Flanke einwirken kann und somit zu einer leichten Deformation des Dichtelements führt.

Nachteilig an einer Dichtlösung, die auf einer Deformation des Dichtelements basiert ist, dass hierdurch deutlich erhöhte Kräfte zum Schließen der Brühkammer notwendig sind. Der Bedienkomfort und die Langlebigkeit der Getränkezubereitungsmaschine wird somit erheblich reduziert.

Eine Alternative wären separate Dichtelemente aus einem Dichtmaterial, wie sie aus den Druckschriften EP 1 654 966 A1 und EP 1 839 543 A1 bekannt sind. Solche Dichtelemente haben aber den oben bereits genannten Nachteil, dass aufgrund der Verwendung separater Materialien einerseits die Fertigungskosten für die Portionskapseln deutlich höher sind und andererseits die Entsorgung bzw. Wiederverwertung bereits verwendeter Portionskapseln schwieriger ist, weil die unterschiedlichen Materialien voneinander getrennt werden müssen.

### Offenbarung der Erfindung

Es ist eine Aufgabe der vorliegenden Erfindung eine Portionskapsel eingangs genannter Art zur Verfügung zu stellen, welche die im Zusammenhang mit dem Stand der Technik skizzierten Probleme nicht aufweist. Insbesondere soll eine Portionskapsel bereitgestellt werden, die eine verbesserte Dichtwirkung zwischen Flansch und Brühkammerelement ermöglicht, ohne dass hierfür deutlich erhöhte Kräfte beim Schließen der Brühkammer notwendig sind oder separate Materialien zur Realisierung der Dichtwirkung notwendig werden.

Die Aufgabe der vorliegenden Erfindung wird gelöst mit einer Portionskapsel zur Zubereitung eines Getränks in einer Brühkammer einer Getränkeherstellungsmaschine, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich zwischen dem Kapselboden und dem umlaufenden Flansch erstreckende Kapselwandung umfasst, wobei der Kapseldeckel an einer Siegelebene am Flansch befestigt ist, wobei der Flansch an seinem äußeren freien Ende einen umlaufenden Wulst aufweist, wobei an dem Flansch ein Dichtelement in Form einer vom Kapseldeckel weg weisenden Dichtsicke vorgesehen ist, wobei sich auf der Seite des Kapseldeckels zwischen dem Wulst und der Dichtsicke die Siegelebene auf dem Flansch erstreckt, wobei die Dichtsicke eine innere Flanke auf Seiten der Kapselwandung und eine äußere Flanke auf Seiten des Wulsts umfasst, wobei die äußere Flanke in einem im Wesentlichen rechten Winkel zur Siegelebene ausgerichtet ist und wobei die innere Flanke in einem Winkel von größer 80 bis kleiner 90 Grad zur Siegelebene ausgerichtet ist.

Die erfindungsgemäße Portionskapsel hat gegenüber dem Stand der Technik den Vorteil, dass der Winkel der inneren Flanke zwischen 80 und 90 Grad liegt. Der Winkel ist somit deutlich steiler als bei den aus dem Stand der Technik bekannten Winkel. Dies führt dazu, dass sich die Dichtsicke beim Schließen der Brühkammer bzw. Aufbrühen der Portionskapsel gar nicht oder nahezu nicht verformt, die gewünschte Dichtwirkung aber durch ein flächiges Anschmiegen oder eine Punktberührung zwischen der inneren Flanke an das Brühkammerelement erzielt wird. Es war für den Fachmann überraschend und nicht zu erwarten, dass eine Abkehr von den aus dem Stand der Technik wohlbekannten Dichtelementen, die allesamt auf einer möglichst leichten Deformation des Dichtelements basieren, zu einer Dichtsicke, die sich aufgrund ihrer steilen Flanken nicht oder fast nicht verformt, das gewünschte Ergebnis von hoher Dichtigkeit erzielt. Zudem braucht es bei dieser Lösung in der Regel keine zusätzlich erhöhten Schließkräfte, da keine Verformung herbeigeführt werden muss. Die innere Flanke weist insbesondere einen Winkel von 81 bis 89 Grad, bevorzugt 82 bis 88 Grad, besonders bevorzugt von 83 bis 85 Grad und ganz besonders bevorzugt von im Wesentlichen 84 Grad zur Siegelebene. Es hat sich gezeigt, dass bei in diesem Winkelbereich einerseits die Deformation der Dichtsicke verhindert werden kann, weil der Winkel möglichst steil ist und die Dichtsicke somit eine hohe Stabilität gegenüber senkrecht zur Siegelebene (auch als Vertikalrichtung Y bezeichnet) auf die Dichtsicke einwirkenden Kräften gewährleistet und andererseits eine einfache und kostengünstige Herstellung der Portionskapsel ermöglicht wird, weil der Winkel stets kleiner als ein rechter Winkel ist. Bei einem rechten Winkel an beiden Flanken der Dichtsicke, der inneren Flanke und der äußeren Flanke, wäre die Entformung der Portionskapsel aus dem Form- bzw. Prägewerkzeug bei der Herstellung der Portionskapsel deutlich schwieriger. Wenn im Sinne der vorliegenden Erfindung davon gesprochen wird, dass sich die Dichtsicke nicht, nahezu nicht oder nur bis zu einem bestimmten Grade verformt, dann bezieht sich diese Aussage in Umfangsrichtung betrachtet nicht notwendigerweise auf den gesamten Umfang der umlaufenden Dichtsicke. Die Vorteile der vorliegenden Erfindung lassen sich schon dadurch erzielen, wenn ein größeres Kreissegment der umlaufenden Dichtsicke keine Verformung oder nur die reduzierte Verformung aufweist. Dies gilt umso mehr, als bei manchen Brühkammerelementen ein zusätzliches Stegsegment über ein kleines Teilkreissegment des mit dem Flansch in Kontakt stehenden Dichtkontur ausgebildet ist. In diesem Bereich kann es trotzdem zu Verformungen der Dichtsicke kommen. Es handelt sich hierbei dann aber lediglich um ein kleines Teilsegment, welches typischerweise weniger als 30 %, vorzugsweise weniger als 20 % und besonders bevorzugt weniger als 10 % des Gesamtumfangs der Dichtsicke ausmacht.

Ein weiterer Gegenstand der vorliegenden Erfindung oder eine Weiterbildung der vorstehend beschriebenen erfindungsgemäßen Portionskapsel ist eine Portionskapsel zur Zubereitung eines Getränks in einer Brühkammer einer Getränkeherstellungsmaschine, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich zwischen dem Kapselboden und dem umlaufenden Flansch erstreckende Kapselwandung umfasst, wobei der Kapseldeckel an einer Siegelebene am Flansch befestigt ist, wobei der Flansch an seinem äußeren freien Ende einen umlaufenden Wulst aufweist, wobei an dem Flansch ein Dichtelement in Form einer vom Kapseldeckel weg weisenden Dichtsicke vorgesehen ist, wobei sich auf der Seite des Kapseldeckels zwischen dem Wulst und der Dichtsicke die Siegelebene auf dem Flansch erstreckt, wobei die Dichtsicke eine innere Flanke auf Seiten der Kapselwandung und eine äußere Flanke auf Seiten des Wulsts umfasst, wobei die Dichtsicke derart ausgebildet ist, dass sie beim Schließen der Brühkammer nicht oder nur um maximal 30 %, bevorzugt um maximal 20 %, besonders bevorzugt um maximal 10 % und ganz besonders bevorzugt um maximal 5 % ihrer Gesamthöhe senkrecht zur Siegelebene deformiert wird.

Es wurde bereits ausgeführt, dass trotz der Vermeidung einer wesentlichen Deformation der Dichtsicke beim Schließen der Brühkammer bzw. Aufbrühen der Portionskapsel, die gewünschte Dichtwirkung vorteilhafterweise durch ein flächiges Anschmiegen oder eine Punktberührung zwischen der inneren Flanke und dem Brühkammerelement erzielt wird. Es war für den Fachmann überraschend und nicht zu erwarten, dass eine Abkehr von den aus dem Stand der Technik wohlbekannten Dichtelementen, die allesamt auf einer möglichst leichten Deformation des Dichtelements basieren, zu einer Dichtsicke, die sich aufgrund ihrer steilen Flanken nicht oder fast nicht verformt, das gewünschte Ergebnis von hoher Dichtigkeit erzielt. Zudem braucht es bei dieser Lösung keine hohen Schließkräfte, da keine Verformung herbeigeführt werden muss. Insbesondere ist die Dichtsicke derart ausgebildet, dass sie bei einer senkrecht zur Siegelebene auf die Dichtsicke wirkenden Kraftbeaufschlagung von bis zu 100 N nicht oder nur um maximal 30 %, bevorzugt um maximal 20 %, besonders bevorzugt um maximal 10 % und ganz besonders bevorzugt um maximal 5 % ihrer Höhe senkrecht zur Siegelebene deformiert wird. Bei der vorliegenden Erfindung ist die Dichtsicke also derart steif und stabil ausgebildet, dass bei einer senkrecht zur Siegelebene, also entlang der Vertikalrichtung, zentral auf die Dichtsicke wirkenden Kraftbeaufschlagung mit einer Kraft von insbesondere bis zu 100 N, die insbesondere plan auf die Spitze der Dichtsicke oder auf einen Flankenbereich der Dichtsicke oder auf eine plane Übergangsebene der Dichtsicke wirkt, keine nennenswerte Deformation der Dichtsicke stattfindet. Die Dichtsicke soll dabei in ihrer Höhe insbesondere maximal 30 %, bevorzugt um maximal 20 %, besonders bevorzugt um maximal 10 % und ganz besonders bevorzugt um maximal 5 % verändert werden können. Weiterhin ist denkbar, dass keine seitliche Verschiebung bzw. Verformung entlang einer zur Siegelebene parallelen Richtung, also in radialer Richtung R von der Mittellängsachse der konzentrisch ausgebildeten Portionskapsel aus betrachtet, erfolgt. Auch hier ist vorgesehen, dass sich die Spitze der Dichtsicke, also der Übergangsbereich der Dichtsicke, um maximal 30 %, bevorzugt um maximal 20 %, besonders bevorzugt um maximal 10 % und ganz besonders bevorzugt um maximal 5 % der Breite der Dichtsicke auf ihrer halben Höhe in radialer Richtung verschiebt oder deformiert.

Wenn im Sinne der vorliegenden Erfindung davon gesprochen wird, dass sich die Dichtsicke nicht, nahezu nicht oder nur bis zu einem bestimmten Grade verformt, dann bezieht sich diese Aussage in Umfangsrichtung betrachtet nicht notwendigerweise auf den gesamten Umfang der umlaufenden Dichtsicke. Die Vorteile der vorliegenden Erfindung lassen sich schon dadurch erzielen, wenn ein größeres Kreissegment der umlaufenden Dichtsicke keine Verformung oder nur die reduzierte Verformung aufweist. Dies gilt umso mehr, als bei manchen Brühkammerelementen ein zusätzliches Stegsegment über ein kleines Teilkreissegment des mit dem Flansch in Kontakt stehenden Dichtkontur ausgebildet ist. In diesem Bereich kann es trotzdem zu Verformungen der Dichtsicke kommen. Es handelt sich hierbei dann aber lediglich um ein kleines Teilsegment, welches typischerweise weniger als 30 %, vorzugsweise weniger als 20 % und besonders bevorzugt weniger als 10 % des Gesamtumfangs der Dichtsicke ausmacht.

Vorteilhafte Ausgestaltungen und Weiterbildungen der Erfindung sind den Unteransprüchen, sowie der folgenden Beschreibung unter Bezugnahme auf die Zeichnungen entnehmbar. Diese vorteilhaften Ausgestaltungen und Weiterbildungen beziehen sich damit gleichermaßen auf beide vorstehend beschriebenen erfindungsgemäßen Portionskapseln.

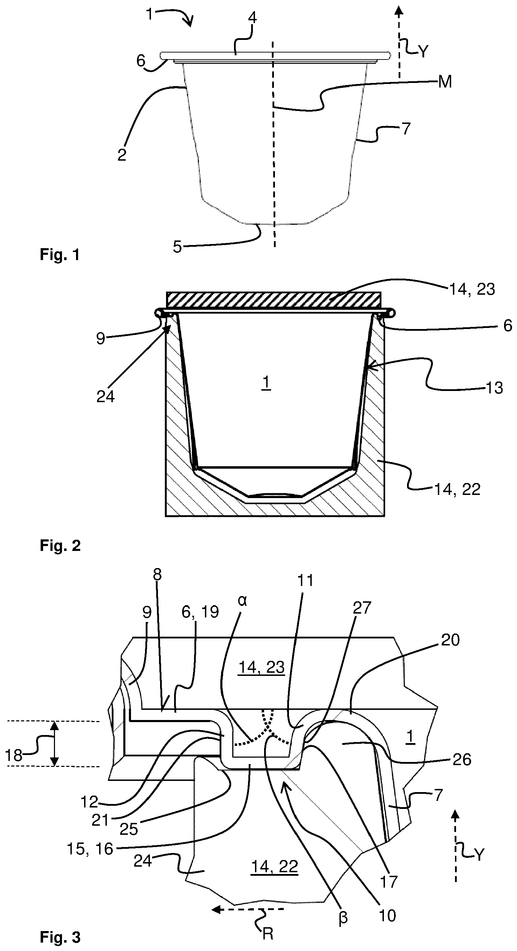

Gemäß einer bevorzugten Ausführungsform der vorliegenden Erfindung ist vorgesehen, dass sich zwischen der inneren Flanke und der äußeren Flanke ein Übergangsbereich erstreckt, wobei vorzugsweise der Übergangsbereich gekrümmt ausgebildet ist oder eine sich parallel zur Siegelebene erstreckende Übergangsebene aufweist. Die gekrümmte Ausbildung des Übergangsbereichs hat den Vorteil, dass die Dichtsicke an Stabilität gewinnt und somit eine Verformung noch wirksamer verhindert werden kann. Hingegen hat die ebene Ausbildung des Übergangsbereichs den Vorteil, dass die Dichtsicke flacher ist und dadurch weniger weit in die Vertiefung der Dichtkontur des Aufnahmeelements der Brühkammer eingreift, so dass beim Schlie-ßen der Brühkammer weniger Kraft auf die Dichtsicke ausgeübt wird. Vorzugsweise weist daher im radialen Querschnitt der umlaufenden Dichtsicke die innere Flanke einen geradlinigen Kontaktbereich aufweist, der sich zwischen dem Flansch und dem Übergangsbereich erstreckt. Die Begrifflichkeit "im radialen Querschnitt" bedeutet, dass man auf eine Schnittbilddarstellung der Flanschkontur entlang der Umfangsrichtung der umlaufenden Flanschkontur schaut. Die Ebene der Schnittbilddarstellung wird demnach durch die Vertikalrichtung und die radiale Richtung aufgespannt, so wie in den Figuren 3 bis 5 illustriert.

Gemäß einer bevorzugten Ausführungsform der vorliegenden Erfindung ist vorgesehen, dass der geradlinige Kontaktbereich eine Länge von 0,1 bis 1,5 Millimeter, bevorzugt von 0,1 bis 0,8 Millimeter, besonders bevorzugt von 0,15 bis 0,55 Millimeter und ganz besonders bevorzugt von 0,2 bis 0,4 Millimeter aufweist. Es hat sich in Simulationen und Experimenten gezeigt, dass bei einem geradlinigen Kontaktbereich der genannten Längen eine optimale Dichtung zwischen der Dichtkontur des Brühkammerelements und dem Flansch erzielt werden kann. Mit anderen Worten: Ein form- und kraftschlüssiges planes Anliegen der inneren Flanke mit einer Dichtnasenflanke der Dichtkontur des Brühkammerelements über eine Länge von 0,1 bis 1,5 Millimeter, bevorzugt von 0,1 bis 0,8 Millimeter, besonders bevorzugt von 0,15 bis 0,55 Millimeter und ganz besonders bevorzugt von 0,2 bis 0,4 Millimeter reicht aus, um eine ausreichende Dichtwirkung zu erzielen, ohne dass eine nennenswerte Deformation der Dichtsicke durch die Dichtkontur notwendig ist.

Gemäß einer bevorzugten Ausführungsform der vorliegenden Erfindung ist vorgesehen, dass die Portionskapsel im Übergang vom geradlinigen Kontaktbereich zum Übergangsbereich einen Radius von 0,05 bis 0,5 Millimeter, bevorzugt von 0,1 bis 0,3 Millimeter und besonders bevorzugt von 0,1 bis 0,2 aufweist. Gemäß einer bevorzugten Ausführungsform der vorliegenden Erfindung ist vorgesehen, dass die Portionskapsel im Übergang von der äußeren Flanke zum Übergangsbereich einen Radius von 0,05 bis 0,5 Millimeter, bevorzugt von 0,1 bis 0,3 Millimeter und besonders bevorzugt von 0,1 bis 0,2 aufweist. Gemäß einer bevorzugten Ausführungsform der vorliegenden Erfindung ist vorgesehen, dass die Höhe der Dichtsicke senkrecht zur Siegelebene zwischen 0,2 und 1 Millimeter, bevorzugt zwischen 0,3 und 0,6 Millimeter und besonders bevorzugt zwischen 0,4 und 0,5 Millimeter umfasst. Die vorstehend beschriebene bevorzugte Bemaßung der Dichtsicke führt dazu, dass die Dichtsicke eine ausreichende Stabilität aufweist, damit keine Deformation derselben während des Schließens der Brühkammer und/oder dem Aufbrühen der Kapsel in der Brühkammer erfolgt.

Gemäß einer bevorzugten Ausführungsform der vorliegenden Erfindung ist vorgesehen, dass die Dichtsicke derart ausgebildet ist, dass sie bei einer senkrecht zur Siegelebene auf die Dichtsicke wirkenden Kraftbeaufschlagung von bis zu 100 N nicht oder nur um maximal 0,2 Millimeter, bevorzugt um maximal 0,15 Millimeter, besonders bevorzugt um maximal 0,1 Millimeter und ganz besonders bevorzugt um maximal 0,05 Millimeter ihrer Höhe senkrecht zur Siegelebene deformiert wird. Bei der vorliegenden Erfindung ist die Dichtsicke also derart steif und stabil ausgebildet, dass bei einer senkrecht zur Siegelebene, also entlang der Vertikalrichtung, zentral auf die Dichtsicke wirkenden Kraftbeaufschlagung mit einer Kraft von insbesondere bis zu 100 N, die insbesondere plan auf die Spitze der Dichtsicke oder auf einen Flankenbereich der Dichtsicke oder auf eine plane Übergangsebene der Dichtsicke wirkt, keine nennenswerte Deformation der Dichtsicke stattfindet. Die Dichtsicke soll dabei in ihrer Höhe insbesondere um maximal 0,2 Millimeter, bevorzugt um maximal 0,15 Millimeter, besonders bevorzugt um maximal 0,1 Millimeter und ganz besonders bevorzugt um maximal 0,05 Millimeter verändert werden können. Weiterhin ist denkbar, dass keine seitliche Verschiebung bzw. Verformung entlang einer zur Siegelebene parallelen Richtung, also in radialer Richtung R von der Mittellängsachse der konzentrisch ausgebildeten Portionskapsel aus betrachtet, erfolgt. Auch hier ist vorgesehen, dass sich die Spitze der Dichtsicke, also der Übergangsbereich der Dichtsicke, um maximal 0,2 Millimeter, bevorzugt um maximal 0,15 Millimeter, besonders bevorzugt um maximal 0,1 Millimeter und ganz besonders bevorzugt um maximal 0,05 Millimeter in radialer Richtung verschiebt oder deformiert.

Gemäß einer bevorzugten Ausführungsform der vorliegenden Erfindung ist vorgesehen, dass die Dichtsicke auf ihrer halben Höhe eine Breite zwischen 0,2 und 1 Millimeter, bevorzugt zwischen 0,3 und 0,8 Millimeter und besonders bevorzugt zwischen 0,4 und 0,6 Millimeter aufweist. Gemäß einer bevorzugten Ausführungsform der vorliegenden Erfindung ist vorgesehen, dass die Dichtsicke eine mittlere Materialstärke zwischen 0,05 und 0,3 Millimeter, bevorzugt zwischen 0,08 und 0,18 Millimeter, besonders bevorzugt zwischen 0,09 und 0,15 Millimeter und ganz besonders bevorzugt von im Wesentlichen 0,11 Millimetern umfasst. Gemäß einer bevorzugten Ausführungsform der vorliegenden Erfindung ist vorgesehen, dass im radialen Querschnitt der umlaufenden Dichtsicke der Übergangsbereich einen geradlinigen Verbindungsbereich aufweist, welcher eine Breite von zwischen 0,3 bis 1,2 Millimeter, bevorzugt zwischen 0,3 bis 1,0 Millimeter und besonders bevorzugt zwischen 0,6 und 0,8 Millimeter aufweist. Gemäß einer bevorzugten Ausführungsform der vorliegenden Erfindung ist vorgesehen, dass die Portionskapsel im Übergang von der äußeren Flanke zum parallel zur Siegelebene verlaufenden Flanschbereich einen Radius von 0,05 bis 0,5 Millimeter, bevorzugt von 0,1 bis 0,3 Millimeter und besonders bevorzugt von 0,1 bis 0,2 aufweist. Dieser Radius kann sich entweder auf die Oberseite des Flansches oder auf die Unterseite des Flansches beziehen. Die vorstehend beschriebene bevorzugte Bemaßung der Dichtsicke führt dazu, dass die Dichtsicke eine ausreichende Stabilität aufweist, damit keine Deformation derselben während des Schließens der Brühkammer und/oder dem Aufbrühen der Kapsel in der Brühkammer erfolgt.

Gemäß einer bevorzugten Ausführungsform der vorliegenden Erfindung ist vorgesehen, dass die Portionskapsel einen sich parallel zur Siegelebene erstreckenden Flanschbereich zwischen dem Wulst und der äußeren Flanke aufweist und wobei die Portionskapsel einen sich zwischen der inneren Flanke und der Kapselwandung erstreckenden Flanschzwischenbereich aufweist, wobei der Flanschbereich und der Flanschzwischenbereich entlang einer zur Siegelebene senkrechten Vertikalrichtung auf gleicher Höhe liegen. Dies hat den Vorteil, dass es beim Schließen der Brühkammer nicht zu einer indirekten Verlagerung oder Verformung der Dichtsicke kommt, indem sich der Flanschzwischenbereich oder der Flanschbereich relativ zueinander in Vertikalrichtung verformen oder verlagern. Stattdessen können sich sowohl der Flanschzwischenbereich als auch der Flanschbereich am Verschlusselement der Brühkammer abstützen und so eine geeignete Gegenkraft zur Vermeidung einer nennenswerten Deformation der Dichtsicke aufbauen. Denkbar ist, dass die Deckelfolie sowohl am Flanschzwischenbereich als auch im Flanschbereich jeweils an den Flansch gesiegelt oder geklebt ist.

Gemäß einer bevorzugten Ausführungsform der vorliegenden Erfindung ist vorgesehen, dass die Portionskapsel im Übergang von der inneren Flanke zu einem sich zwischen der Dichtsicke und der Kapselwandung erstreckenden Flanschzwischenbereich einen Radius von 0,08 bis 0,5 Millimeter, bevorzugt von 0,1 bis 0,3 Millimeter und besonders bevorzugt von im Wesentlichen 0,2 aufweist. Dieser Radius kann sich entweder auf die Oberseite des Flansches oder auf die Unterseite des Flansches beziehen.

Gemäß einer bevorzugten Ausführungsform der vorliegenden Erfindung ist vorgesehen, dass die Portionskapsel einen sich zwischen der inneren Flanke und der Kapselwandung erstreckenden Flanschzwischenbereich aufweist, wobei der Flanschzwischenbereich gekrümmt ist. Vorzugsweise ist ein gekrümmter Flanschzwischenbereich formstabiler als ein ebener Flanschzwischenbereich. Vorzugsweise liegt der Scheitelpunkt des gekrümmten Flanschzwischenbereichs entlang einer zur Siegelebene senkrechten Vertikalrichtung auf gleicher Höhe wie der Flanschbereich, so dass sich sowohl der Flanschzwischenbereich als auch der Flanschbereich dennoch am Verschlusselement der Brühkammer abstützen. Vorzugsweise weist die Krümmung des Flanschzwischenbereich einen Radius zwischen 0,1 und 1 Millimeter, bevorzugt zwischen 0,3 und 0,8 Millimeter und ganz besonders bevorzugt zwischen 0,4 und 0,6 Millimeter auf. Dieser Radius kann sich entweder auf die Oberseite des Flansches oder auf die Unterseite des Flansches beziehen.

Gemäß einer bevorzugten Ausführungsform der vorliegenden Erfindung ist vorgesehen, dass im radialen Querschnitt der Dichtsicke die äußere Flanke einen geradlinigen Flankenabschnitt aufweist, der eine Länge zwischen 0,2 und 1 Millimeter, bevorzugt zwischen 0,3 und 0,6 Millimeter und besonders bevorzugt zwischen 0,4 und 0,5 Millimeter umfasst. Gemäß einer bevorzugten Ausführungsform der vorliegenden Erfindung ist vorgesehen, dass im radialen Querschnitt die Erstreckung der Siegelebene zwischen der äußeren Flanke und dem Wulst eine Länge zwischen 0,3 und 1,5 Millimeter, bevorzugt zwischen 0,5 und 1,2 Millimeter und besonders bevorzugt zwischen 0,7 und 0,9 Millimeter umfasst.

Gemäß einer bevorzugten Ausführungsform der vorliegenden Erfindung ist vorgesehen, dass der Wulst über eine die Siegelebene bildende Oberseite über den Flansch vorsteht. Vorzugsweise steht der Wulst über eine der Siegelebene abgewandten Unterseite vom Flansch vor, wobei der Flansch auf der Unterseite weniger als die Dichtsicke vom Flansch absteht und/oder wobei der Wulst auf der Oberseite weniger als auf der Unterseite über den Flansch vorsteht. Der Wulst ist insbesondere durch ein Einrollen des Flanschrandes gebildet, wobei vorzugsweise der Flanschrand in Richtung Kapselboden eingerollt ist.

Gemäß einer bevorzugten Ausführungsform der vorliegenden Erfindung ist vorgesehen, dass das Basiselement einstückig aus Aluminium gefertigt ist. Vorzugsweise wird das Basiselement durch Kalt- oder Warmverformung, insbesondere Tiefziehen hergestellt, bei welchem die Dichtsicke integral in den Flansch eingeprägt wird. Die Portionskapsel ist bevorzugt kegelstumpfförmig oder zylinderförmig ausgeführt. Der durch das Basiselement gebildete Hohlraum dient der Aufnahme von Getränkerohmaterial, beispielsweise Kaffeeröstgranulat, Instantkaffee, Schokoladenpulver, Teeverschnitt, Milchpulver und/oder dergleichen.

Ein weiterer Gegenstand der vorliegenden Erfindung ist ein System zur Zubereitung eines Getränks aufweisend eine Getränkeherstellungsmaschine und die erfindungsgemäße Portionskapsel, wobei die Getränkeherstellungsmaschine eine Brüheinheit mit einem ersten Brühkammerteil und einem zweiten Brühkammerteil aufweist, wobei das erste und/oder das zweite Brühkammerteil relativ zum anderen Brühkammerteil zwischen einer angenäherten Position, in welcher das erste und das zweite Brühkammerteil eine geschlossene Brühkammer bilden, und einer offenen Position, in welcher das erste und das zweite Brühkammerteil zum Einsetzen oder Auswerfen einer Portionskapsel voneinander beabstandet sind, bewegbar ist, wobei das erste Brühkammerteil ein Aufnahmeelement zur teilweisen Aufnahme der Portionskapsel und das zweite Brühkammerteil ein Verschlusselement für das Aufnahmeelement umfasst, wobei in der geschlossenen Position der Flansch der Portionskapsel zwischen einem Randbereich des Aufnahmeelements und dem Verschlusselement formschlüssig und dichtend aufgenommen ist.

Die erfindungsgemäße Portionskapsel ist Teil des erfindungsgemäßen Systems, weswegen alle im Zusammenhang mit der Portionskapsel erläuterten Vorteil und Weiterbildungen gleichermaßen auch für das erfindungsgemäße System gelten.

Gemäß einer bevorzugten Ausführungsform der vorliegenden Erfindung ist vorgesehen, dass das im Randbereich eine Dichtkontur zum dichtenden Eingriff mit der Dichtsicke ausgebildet ist, wobei die Dichtkontur eine umlaufende Vertiefung und eine benachbart zur Vertiefung ausgebildete umlaufende Dichtnase umfasst, wobei vorzugsweise die Vertiefung in radialer Richtung außerhalb der Dichtnase angeordnet ist und wobei eine äußere Dichtnasenflanke eine innere Wandung der Vertiefung bildet. Insbesondere greifen in der geschlossenen Position die Dichtnase in den Flanschzwischenbereich und die Dichtsicke in die Vertiefung derart ein, dass die Dichtnasenflanke mit der inneren Flanke in radialem Querschnitt einen Linien- oder Punktkontakt ausbilden.

Gemäß einer bevorzugten Ausführungsform der vorliegenden Erfindung ist vorgesehen, dass in der geschlossenen Position die Dichtsicke durch die Dichtkontur nicht oder nur um maximal 30 %, bevorzugt um maximal 20 %, besonders bevorzugt um maximal 10 % und ganz besonders bevorzugt um maximal 5 % ihrer Höhe senkrecht zur Siegelebene deformiert wird.

Gemäß einer bevorzugten Ausführungsform der vorliegenden Erfindung ist vorgesehen, dass die Dichtkontur eine weitere umlaufende Dichtnase aufweist, wobei die Vertiefung in radialer Richtung zwischen der Dichtnase und der weiteren Dichtnase angeordnet ist, wobei die Dichtnase länger als die weitere Dichtnase ausgebildet ist und wobei in der geschlossenen Position die weitere Dichtnase mit der äußeren Flanke im radialen Querschnitt einen Punktkontakt ausbildet.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Schnittbildansicht einer Portionskapsel gemäß einer beispielhaften Ausführungsform der vorliegenden Erfindung.
- **Figur 2**: zeigt eine schematische Ansicht der Portionskapsel gemäß einer weiteren beispielhaften Ausführungsform der vorliegenden Erfindung.
- **Figur 3**: zeigt eine schematische Detailansicht des Ringelements gemäß einer beispielhaften Ausführungsform der vorliegenden Erfindung.
- **Figur 4**: zeigt eine schematische Ansicht des Ringelements gemäß einer weiteren beispielhaften Ausführungsform der vorliegenden Erfindung.
- **Figur 5**: zeigt eine schematische Detailansicht des Ringelements gemäß der in **Figur 4** dargestellten beispielhaften Ausführungsform der vorliegenden Erfindung.
- **Figur 6**: zeigt eine weitere schematische Detailansicht des Ringelements gemäß der in **Figur 4** dargestellten beispielhaften Ausführungsform der vorliegenden Erfindung.
- **Figur 7**: zeigt eine schematische Ansicht der Portionskapsel gemäß einer weiteren beispielhaften Ausführungsform der vorliegenden Erfindung.

### Ausführungsformen der Erfindung

In **Figuren 1 und 2** sind eine schematische Seitenansicht einer Portionskapsel 1 und ein Schnittbildansicht eines Systems aus der Portionskapsel 1 und einem Teil einer Getränkeherstellungsmaschine 14 zur Zubereitung eines Getränks gemäß einer beispielhaften ersten Ausführungsform der vorliegenden Erfindung dargestellt.

Die Portionskapsel 1 weist ein beispielhaft becherförmig und kegelstumpfförmig ausgebildetes Basiselement 2 auf, welches an seiner geschlossenen Seite einen Kapselboden 5 und an seiner offenen Seite einen umlaufenden Flansch 6 aufweist. Zwischen dem Kapselboden 5 und dem Flansch 6 erstreckt sich eine Kapselwandung 7 um einen Hohlraum 3. Die Portionskapsel 1 ist um ihre zentrale Mittellängsachse M, die eine Vertikalrichtung Y definiert, rotationssymmetrisch aufgebaut. In radialer Richtung R steht der Flansch 6, der kreisförmig und somit in Umfangsrichtung umlaufend ausgebildet ist, nach außen über die Kapselwandung 7 vor.

Der Flansch 6 ist mit einem Kapseldeckel 4 in Form einer Deckelfolie fest verbunden, welche den Hohlraum 3 auf der offenen Seite des Basiselements 2 verschließt. Der Flansch 6 weist hierfür eine dem Kapseldeckel 4 zugewandte Siegelebene 8 auf, welche sich ungefähr rechtwinklig zur Vertikalrichtung Y erstreckt. Der Kapseldeckel 4 ist in seinem Randbereich auf die Siegelebene 8 gesiegelt, geschweißt oder geklebt.

Der Kapseldeckel 4 ist bevorzugt aus Aluminium oder Kunststoff, ausgeführt. Innerhalb des Basiselements 2 ist der Hohlraum 3 ausgebildet, welcher mit Getränkerohmaterial, beispielsweise Kaffeeröstgranulat, Instantkaffee, Schokoladenpulver, Teeverschnitt, Milchpulver und/oder dergleichen befüllt ist (aus Gründen der Übersichtlichkeit nicht illustriert) und welcher durch den Kapseldeckel 4 verschlossen ist.

Die becherförmige Ausgestaltung des Basiselements 2 wird vorzugsweise durch Thermoformen, beispielsweise Tiefziehen mittels Unterdruck, Überdruck und/oder einem beweglichen Stempel, erzeugt. Das Basiselement 2 ist vorzugsweise als tiefgezogenes Aluminiumteil ausgebildet. Alternativ wäre aber auch denkbar, dass das Basiselement 2 aus Polyethylen (PE), Polypropylen (PP), Polyvinylchlorid (PVC) oder Polyethylenterephthalat (PET) ausgebildet ist. Alternativ wird die Portionskapsel 1 mittels Spritzgussverfahren, insbesondere im Einkomponenten-, Mehrkomponenten- oder In-Mold-Verfahren, hergestellt.

Die Portionskapsel 1 wird im Gebrauch in einer Getränkeherstellungsmaschine 14 in eine Brüheinheit eingeführt. Die Brüheinheit umfasst ein erstens Brühkammerteil und ein zweites Brühkammerteil, wobei das erste oder das zweite Brühkammerteil relativ zum anderen Brühkammerteil zwischen einer angenäherten Position, in welcher das erste und das zweite Brühkammerteil eine geschlossene Brühkammer 13 bilden, und einer offenen Position, in welcher das erste und das zweite Brühkammerteil zum Einsetzen oder Auswerfen der Portionskapsel 1 voneinander beabstandet sind, bewegbar ist.

Das erste Brühkammerteil ist als becherförmiges Aufnahmeelement 22 ausgebildet, welches die Portionskapsel 1 größtenteils aufnimmt, insbesondere wenn die Brühkammer 13 in der geschlossenen Position befindlich ist. Das zweite Brühkammerteil ist als Verschlusselement 23 für das Aufnahmeelement 22 ausgebildet. In der in Figur 2 abgebildeten geschlossenen Position ist der Flansch 6 der Portionskapsel 1 zwischen einem Randbereich 24 des Aufnahmeelements 22 und dem Verschlusselement 23 dichtend eingeklemmt.

In dieser geschlossenen Position werden der Kapseldeckel 4 und der Kapselboden 5 nacheinander oder gleichzeitig perforiert. Die eine oder mehrere Perforationsöffnungen im Kapselboden 5 werden dabei insbesondere durch eine oder mehrere Perforationsspitzen am Verschlusselement 23 während des Schließens der Brühkammer 13 gebildet, während die Perforationsöffnungen im Kapseldeckel 4 vorzugsweise durch Perforationsstrukturen im Boden des Aufnahmeelements schon während des Schließens der Brühkammer 13 oder erst durch den Druckaufbau im Inneren der Portionskapsel 1 während des Getränkeherstellungsprozesses erzeugt werden.

Durch die eine oder mehrere Perforationsöffnungen im Kapselboden 5 wird Extraktionsflüssigkeit unter Druck in den Hohlraum 3 eingeleitet. Durch die Wechselwirkung zwischen der Extraktionsflüssigkeit und dem Getränkerohmaterial entsteht das gewünschte Getränk, welches die Portionskapsel 1 durch die Perforationsöffnungen im Kapseldeckel 4 verlässt und einem Getränkegefäß zugeführt wird. Durch ein optionales Filtermedium können etwaige Partikel des Getränkerohmaterials aus dem Getränk gefiltert und in der Portionskapsel 1 zurückgehalten werden. Vorzugsweise fungiert aber der mehrfach perforierte Kapseldeckel 4 als Filterelement.

In **Figur 3** ist eine Detailansicht der in Figur 2 illustrierten Portionskapsel 1 und Brühkammer 13 gemäß der beispielhaften ersten Ausführungsform der vorliegenden Erfindung dargestellt. Die Figur 3 zeigt dabei die Schnittdarstellung des Flansches 6 auf der linken Seite von Figur 2 in einer vergrößerten Illustration.

Der abgebildete Flansch 6 erstreckt sich im Wesentlichen horizontal, also parallel zur radialen Richtung R, von dem oberen Ende der Kapselwandung 7 bis zu seinem freien äußeren Ende, an welchem der Flansch 6 mit einem Wulst 9 abschließt. Der Wulst 9 umfasst insbesondere ein in Richtung des Kapselbodens 5 aufgerolltes Flanschende

Zudem steht der Wulst 9 in Vertikalrichtung Y insbesondere sowohl über eine die Siegelebene 8 bildende Oberseite vom den Flansch 6 als auch über eine der Siegelebene 8 abgewandten Unterseite vom Flansch 6 jeweils vor, wobei der Flansch 6 auf der Unterseite weniger als eine Dichtsicke 10 vom Flansch 6 absteht und ferner auf der Oberseite weniger als auf der Unterseite über den Flansch 6 vorsteht.

Zwischen dem Wulst 9 und dem Ende der Kapselwandung 7 weist der Flansch 6 die Dichtsicke 10 auf, welche in Form eine in Vertikalrichtung Y vom Kapseldeckel 4 weg gerichteten und konzentrisch in Umfangsrichtung um die Mittellängsachse M umlaufende Einprägung ausgebildet ist. Die Dichtsicke 10 weist dabei eine der Kapselwandung 7 zugewandte innere Flanke 11 und eine dem Wulst 9 zugewandte äußere Flanke 12 auf.

Zwischen der inneren Flanke 11 und der äußeren Flanke 12 erstreckt sich ein planer Übergangsbereich 15 in Form der Übergangsebene 16, die insbesondere parallel zur Siegelebene 8 verläuft. Zwischen der äußeren Flanke 12 und dem Wulst 9 weist der Flansch 6 einen Flanschbereich 19, dessen Oberseite die Siegelebene 8 bildet, auf. Die äußere Flanke 12 ist im Wesentlichen rechtwinklig zur Siegelebene 8 ausgebildet, d.h. die äußere Flanke verläuft zur Ebene des Flanschbereichs 19 in einem Winkel α von ca. 90 Grad.

Die äußere Flanke 12 hat insbesondere einen geradlinigen Flankenabschnitt 21, der vorzugsweise eine Länge zwischen 0,4 und 0,5 Millimeter umfasst und der rechtwinklig zum Flanschbereich 19 verläuft. Der Flanschbereich 19 hat vorzugsweise eine Länge von 0,7 bis 0,9 Millimeter. Der Übergang zwischen Flanschbereich 19 und äußerer Flanke 12 weist auf der Unterseite des Flansches 6 vorzugsweise einen Radius von 0,08 bis 0,12 Millimeter auf, während der Übergang von der äußeren Flanke 12 zur Übergangsebene 16 sowie zur Übergangsebene 16 zur inneren Flanke 11 auf der Unterseite des Flansches 6 jeweils einen Radius von 0,08 bis 0,12 aufweisen.

Zwischen der inneren Flanke 11 und dem oberen Ende der Kapselwandung 7 weist der Flansch 6 einen Flanschzwischenbereich 20 auf. Der Flanschzwischenbereich ist im vorliegenden Beispiel im radialen Querschnitt gekrümmt ausgebildet. Die Krümmung weist dabei auf der Unterseite des Flansches 6 insbesondere einen Radius zwischen 0,3 und 0,5 Millimeter auf.

Die innere Flanke 11 weist im radialen Querschnitt einen geradlinigen Kontaktbereich 17 auf, d.h. der geradlinige Kontaktbereich ist die Länge der Gerade zwischen den zwei Wendepunkten im Verlauf der inneren Flanke 11. Die Länge des Kontaktbereichs 17 beträgt im vorliegenden Beispiel 0,1 bis 1,5 Millimeter, bevorzugt 0,1 bis 0,8 Millimeter, besonders bevorzugt 0,15 bis 0,55 Millimeter und ganz besonders bevorzugt 0,2 bis 0,4 Millimeter.

Erfindungsgemäß ist der Winkel β zwischen der inneren Flanke 11 bzw. dem geradlinigen Kontaktbereich 17 und der Siegelebene 8 größer als 80 Grad und kleiner als 90 Grad, wobei der Winkel β insbesondere in einem Intervall von 81 bis 89 Grad, bevorzugt von 82 bis 88 Grad, besonders bevorzugt von 83 bis 85 Grad und ganz besonders bevorzugt von im Wesentlichen 84 Grad zur Siegelebene 8 liegt.

Der Flanschbereich 19 und der Scheitelpunkt des Flanschzwischenbereichs 20 liegen in Vertikalrichtung Y auf gleicher Höhe. Die Höhe 18 der Dichtsicke 10 entspricht der Gesamterstreckung der Dichtsicke 10 von der Unterseite des Flansch- und Flanschzwischenbereichs 19, 20 zur Unterseite des Flansches 6 im Bereich der Übergangsebene 16. Diese Höhe 18 beträgt senkrecht zur Siegelebene 8 zwischen 0,2 und 1 Millimeter, bevorzugt zwischen 0,3 und 0,6 Millimeter und besonders bevorzugt zwischen 0,4 und 0,5 Millimeter.

Die Dichtsicke 10 weist auf ihrer halben Höhe 18 optional eine Breite zwischen 0,2 und 1 Millimeter, bevorzugt zwischen 0,3 und 0,8 Millimeter und besonders bevorzugt zwischen 0,4 und 0,6 Millimeter auf.

Die Materialstärke des Aluminiums im Bereich des Flansches 6 beträgt vorzugsweise zwischen 0,1 und 0,13 Millimeter.

In Figur 3 ist ebenfalls der Randbereich 24 des Aufnahmeelements 22 dargestellt, welcher mit dem Flansch 6 der Portionskapsel 1 in dichtendem Eingriff steht. Der Randbereich 24 umfasst eine Dichtkontur zum dichtenden Eingriff mit der Dichtsicke 10 ausgebildet ist.

Die Dichtkontur weist hierfür eine in Umfangsrichtung umlaufende Vertiefung 25 und eine benachbart zur Vertiefung 25 ausgebildete in Umfangsrichtung ebenfalls umlaufende Dichtnase 26 auf. In radiale Richtung R betrachtet ist die Vertiefung 25 außerhalb der Dichtnase 26 angeordnet, so dass eine äußere Dichtnasenflanke 27 der Dichtnase 26 eine innere Wandung der Vertiefung 25 bildet.

In der abgebildeten geschlossenen Position greift die Dichtnase 26 in den Flanschzwischenbereich 20 ein, während die Dichtsicke 10 in die Vertiefung 25 eingreifen. Hierdurch bildet sich zwischen der Dichtnasenflanke 27 und der inneren Flanke 11 in radialem Querschnitt einen Linien oder Punktkontakt 28 aus. Dieser Linien- oder Punktkontakt 28 ist in Umfangsrichtung umlaufend vorhanden und bildet damit die eigentliche Abdichtung zwischen Flansch 6 und Aufnahmeelement 22, so dass keine oder kaum Extraktionsflüssigkeit an der Getränkesubstanz vorbei zum Auslass der Brühkammer 13 fließen kann.

Der Scheitelpunkt der Dichtnase 26 berührt optional die Unterseite der Krümmung des Flanschzwischenbereichs 20, während die Unterseite der Übergangsebene 16 optional den Boden der Vertiefung 25 berührt.

Die vorstehend beschriebene Ausbildung und Dimensionierung der Dichtsicke 10 führt dazu, dass sich die Dichtsicke 10 beim Schließen der Brühkammer 14 und/oder beim Aufbrühen des Getränks nicht oder fast nicht deformiert. Die Abdichtung erfolgt hauptsächlich durch den insbesondere umlaufenden Linien- oder Punktkontakt 28.

Mit anderen Worten: Die Dichtsicke 10 ist derart ausgebildet, dass sie beim Schließen der Brühkammer 13 und/oder Aufbrühen der Portionskapsel 1 nicht oder nur um maximal 30 %, bevorzugt um maximal 20 %, besonders bevorzugt um maximal 10 % und ganz besonders bevorzugt um maximal 5 % ihrer Höhe 18 senkrecht zur Siegelebene 8 deformiert wird. Insbesondere ist die Dichtsicke 10 somit derart ausgebildet ist, dass sie bei einer senkrecht zur Siegelebene 8 auf die Dichtsicke 10 wirkenden Kraftbeaufschlagung von bis zu 100 N nicht oder nur um maximal 30 %, bevorzugt um maximal 20 %, besonders bevorzugt um maximal 10 % und ganz besonders bevorzugt um maximal 5 % ihrer Höhe 18 senkrecht zur Siegelebene 8 deformiert wird.

Die Dichtsicke 10 soll beim Schließen der Brühkammer 13 und/oder Aufbrühen der Portionskapsel 1 in ihrer Höhe 18 insbesondere um maximal 0,2 Millimeter, bevorzugt um maximal 0,15 Millimeter, besonders bevorzugt um maximal 0,1 Millimeter und ganz besonders bevorzugt um maximal 0,05 Millimeter in Vertikalrichtung Y verändert werden.

Vorzugsweise ist die Dichtsicke 10 dadurch ebenfalls derart steif ausgebildet, dass auch keine seitliche Verschiebung bzw. Verformung in radialer Richtung R erfolgt. Auch hier ist vorgesehen, dass sich die Spitze der Dichtsicke 10, also der Übergangsbereich 15 der Dichtsicke 10, um maximal 30 %, bevorzugt um maximal 20 %, besonders bevorzugt um maximal 10 % und ganz besonders bevorzugt um maximal 5 % der Breite der Dichtsicke 8 auf ihrer halben Höhe in radialer Richtung R verschiebt oder deformiert.

Bei der Dichtsicke 10 ist beim Schließen der Brühkammer 13 und/oder Aufbrühen der Portionskapsel 1 vorzugsweise vorgesehen, dass sich die Spitze der Dichtsicke 10, also der Übergangsbereich 15 der Dichtsicke10, um maximal 0,2 Millimeter, bevorzugt um maximal 0,15 Millimeter, besonders bevorzugt um maximal 0,1 Millimeter und ganz besonders bevorzugt um maximal 0,05 Millimeter in radialer Richtung R verschiebt oder deformiert.

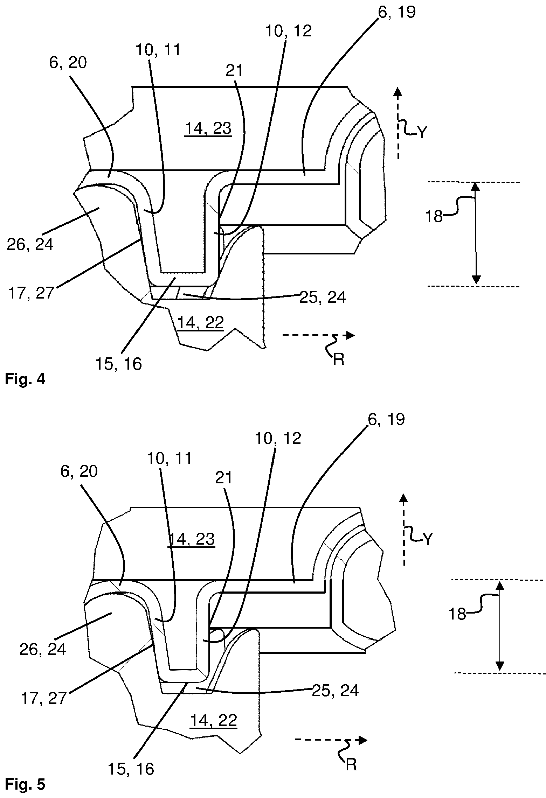

In **Figur 4** ist eine Detailansicht der in Figur 2 illustrierten Portionskapsel 1 und Brühkammer 13 gemäß einer beispielhaften zweiten Ausführungsform der vorliegenden Erfindung dargestellt. Die Figur 4 zeigt dabei die Schnittdarstellung des Flansches 6 auf der rechten Seite (beispielsweise von Figur 2) in einer vergrößerten Illustration.

Die zweite Ausführungsform gleicht im Wesentlichen der in Figur 3 illustrierten ersten Ausführungsform, so dass alle vorstehenden Erläuterungen analog gelten.

Im Unterschied weist die Dichtsicke 10 bei der zweiten Ausführungsform allerdings eine Höhe 0,7 bis 0,8 Millimetern auf. Der geradlinige Kontaktbereich 17 erstreckt sich dadurch über 0,5 bis 0,6 Millimeter, während die Übergangsebene 16 vorzugsweise ebenfalls eine Breite von 0,5 bis 0,6 Millimeter umfasst. Der Flanschbereich 19 erstreckt sich ferner insbesondere über 0,9 bis 1 Millimeter.

Die Dichtkontur weist in diesem Beispiel eine weitere umlaufende Dichtnase 28 auf, die in Kontakt im radialen Querschnitt mit der äußeren Flanke 12 einen Punktkontakt ausbildet. Dieser umlaufende Punktkontakt führt zu einer zusätzlichen Dichtwirkung. Die Vertiefung 25 ist in radialer Richtung zwischen der Dichtnase 26 und der weiteren Dichtnase 28 angeordnet. Die Dichtnase 26 ist entlang der Vertikalrichtung Y ferner länger als die weitere Dichtnase 28 ausgebildet.

Denkbar ist, dass bei dieser Ausführungsform nur ein größeres Kreissegment der umlaufenden Dichtsicke 10 keine Verformung oder nur die reduzierte Verformung erfährt. Dies gilt umso mehr, als bei manchen Aufnahmeelementen 22 ein zusätzliches Stegsegment über ein kleines Teilkreissegment in der Vertiefung 25 der Dichtkontur ausgebildet ist. In dem Bereich dieses Stegsegments kann es trotzdem zu Verformungen der Dichtsicke 10 kommen. Es handelt sich hierbei dann aber lediglich um ein kleines Teilsegment der umlaufenden Dichtsicke 10, welches typischerweise weniger als 30 %, vorzugsweise weniger als 20 % und besonders bevorzugt weniger als 10 % des Gesamtumfangs der Dichtsicke 10 ausmacht. Das übrige und damit deutlich größere Teilsegment der umlaufenden Dichtsicke 10 wird dennoch nicht oder nur begrenzt verformt.

In **Figur 5** ist eine Detailansicht der in Figur 2 illustrierten Portionskapsel 1 und Brühkammer 13 gemäß einer beispielhaften dritten Ausführungsform der vorliegenden Erfindung dargestellt. Die Figur 4 zeigt dabei die Schnittdarstellung des Flansches 6 auf der rechten Seite (beispielsweise von Figur 2) in einer vergrößerten Illustration.

Die dritte Ausführungsform gleicht im Wesentlichen der in Figur 4 illustrierten zweiten Ausführungsform, so dass alle vorstehenden Erläuterungen analog gelten.

Im Unterschied weist die Dichtsicke 10 bei der dritten Ausführungsform allerdings eine Höhe 0,8 bis 0,9 Millimetern auf. Der geradlinige Kontaktbereich 17 erstreckt sich dadurch über 0,3 bis 0,5 Millimeter, während die Übergangsebene 16 vorzugsweise ebenfalls eine Breite von 0,4 bis 0,5 Millimeter umfasst. Der Flanschbereich 19 erstreckt sich ferner insbesondere über 1 bis 1,1 Millimeter.

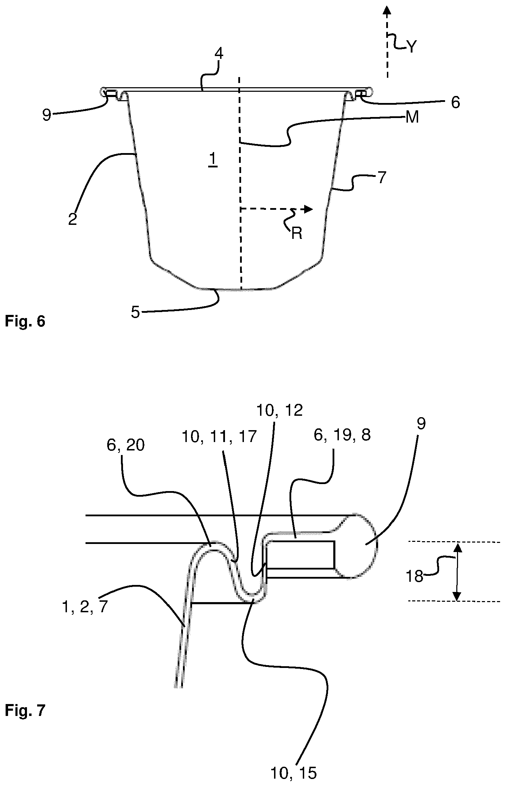

In **Figuren 6 und 7** sind eine Gesamtansicht und eine Detailansicht einer Portionskapsel 1 gemäß einer beispielhaften vierten Ausführungsform der vorliegenden Erfindung dargestellt. Die Figur 7 zeigt dabei die Schnittdarstellung des Flansches 6 auf der rechten Seite von Figur 6 in einer vergrößerten Illustration.

Die vierte Ausführungsform gleicht im Wesentlichen der in Figur 4 illustrierten zweiten Ausführungsform, so dass alle vorstehenden Erläuterungen analog gelten.

Im Unterschied ist bei der vierten Ausführungsform der Übergangsbereich 15 nicht als plane Übergangsebene 16 sondern als gekrümmter Übergangsbereich ausgebildet, wodurch der Dichtsicke 10 noch mehr Stabilität verliehen wird.

Die Dichtsicke 10 weist bei der vierten Ausführungsform sodann eine Höhe 1 bis 1,4 Millimetern auf. Der geradlinige Kontaktbereich 17 erstreckt sich dadurch über 0,8 bis 1,2 Millimeter. Die Breite der Dichtsicke 10 auf ihrer halben Höhe 18 umfasst ca. 0,4 bis 0,8 Millimeter. Der Flanschbereich 19 erstreckt sich ferner insbesondere über 1,3 bis 1,5 Millimeter.

### Bezugszeichenliste

- 1: Portionskapsel
- 2: Basiselement
- 3: Hohlraum
- 4: Kapseldeckel
- 5: Kapselboden
- 6: Flansch
- 7: Kapselwandung
- 8: Siegelebene
- 9: Wulst
- 10: Dichtsicke
- 11: Innere Flanke
- 12: Äußere Flanke
- 13: Brühkammer
- 14: Getränkeherstellungsmaschine
- 15: Übergangsbereich
- 16: Übergangsebene
- 17: Kontaktbereich
- 18: Höhe der Dichtsicke
- 19: Flanschbereich
- 20: Flanschzwischenbereich
- 21: Flankenabschnitt
- 22: Aufnahmeelement
- 23: Verschlusselement
- 24: Randbereich
- 25: Vertiefung
- 26: Dichtnase
- 27: Dichtnasenflanke
- 28: Weitere Dichtnase
- α: Winkel
- β: Winkel
- R: Radiale Richtung
- Y: Vertikalrichtung
- M: Mittellängsachse

## Patentansprüche

1. System zur Zubereitung eines Getränks aufweisend eine Getränkeherstellungsmaschine (14) und eine Portionskapsel (1), wobei die Getränkeherstellungsmaschine (14) eine Brüheinheit mit einem ersten Brühkammerteil und einem zweiten Brühkammerteil aufweist, wobei das erste und/oder das zweite Brühkammerteil relativ zum anderen Brühkammerteil zwischen einer angenäherten Position, in welcher das erste und das zweite Brühkammerteil eine geschlossene Brühkammer (13) bilden, und einer offenen Position, in welcher das erste und das zweite Brühkammerteil zum Einsetzen oder Auswerfen der Portionskapsel (1) voneinander beabstandet sind, bewegbar ist, wobei das erste Brühkammerteil ein Aufnahmeelement (22) zur teilweisen Aufnahme der Portionskapsel (1) und das zweite Brühkammerteil ein Verschlusselement (23) für das Aufnahmeelement umfasst, wobei in der geschlossenen Position ein Flansch (6) der Portionskapsel (1) zwischen einem Randbereich (24) des Aufnahmeelements (22) und dem Verschlusselement (23) formschlüssig und dichtend aufgenommen ist, wobei die Portionskapsel (1) ein Basiselement (2) mit einem Hohlraum (3) zum Aufnehmen eines Getränkerohmaterials und einen den Hohlraum (3) verschließenden Kapseldeckel (4) aufweist, wobei das Basiselement (2) einen Kapselboden (5), den umlaufenden Flansch (6) und eine sich zwischen dem Kapselboden (5) und dem umlaufenden Flansch (6) erstreckende Kapselwandung (7) umfasst, wobei der Kapseldeckel (4) an einer Siegelebene (8) am Flansch (6) befestigt ist, wobei der Flansch (6) an seinem äußeren freien Ende einen umlaufenden Wulst (9) aufweist, wobei an dem Flansch (6) ein Dichtelement in Form einer vom Kapseldeckel (4) weg weisenden Dichtsicke (10) vorgesehen ist, wobei sich auf der Seite des Kapseldeckels (4) zwischen dem Wulst (9) und der Dichtsicke (10) die Siegelebene (8) auf dem Flansch (6) erstreckt, wobei die Dichtsicke (10) eine innere Flanke (11) auf Seiten der Kapselwandung (7) und eine äußere Flanke (12) auf Seiten des Wulsts (9) umfasst, wobei die Dichtsicke (10) derart ausgebildet ist, dass sie beim Schließen der Brühkammer (13) um maximal 10 % senkrecht zur Siegelebene (8) deformiert wird, wobei sich zwischen der inneren Flanke (11) und der äußeren Flanke (12) ein Übergangsbereich (15) erstreckt, wobei der Übergangsbereich (15) eine sich parallel zur Siegelebene (8) erstreckende Übergangsebene (16) aufweist.

2. System nach Anspruch 1, wobei die Dichtsicke (10) derart ausgebildet ist, dass sie beim Schließen der Brühkammer (13) um maximal 5 % senkrecht zur Siegelebene (8) deformiert wird.

3. System nach einem der vorhergehenden Ansprüche, wobei die Dichtsicke (10) derart ausgebildet ist, dass sie bei einer senkrecht zur Siegelebene (8) auf die Dichtsicke (10) wirkenden Kraftbeaufschlagung von bis zu 100 N nicht oder nur um maximal 30 %, bevorzugt um maximal 20 %, besonders bevorzugt um maximal 10 % und ganz besonders bevorzugt um maximal 5 % ihrer Höhe (18) senkrecht zur Siegelebene (8) deformiert wird.

4. System nach einem der vorherigen Ansprüche, wobei im radialen Querschnitt der umlaufenden Dichtsicke (10) die innere Flanke (11) einen geradlinigen Kontaktbereich (17) aufweist, der sich zwischen dem Flansch (6) und dem Übergangsbereich (15) erstreckt.

5. System nach Anspruch 4, wobei der geradlinige Kontaktbereich (17) eine Länge von 0,1 bis 1,5 Millimeter, bevorzugt von 0,1 bis 0,8 Millimeter, besonders bevorzugt von 0,15 bis 0,55 Millimeter und ganz besonders bevorzugt von 0,2 bis 0,4 Millimeter aufweist.

6. System nach einem der vorhergehenden Ansprüche, wobei die Höhe (18) der Dichtsicke (10) senkrecht zur Siegelebene (8) zwischen 0,2 und 1 Millimeter, bevorzugt zwischen 0,3 und 0,6 Millimeter und besonders bevorzugt zwischen 0,4 und 0,5 Millimeter umfasst.

7. System nach Anspruch 6, wobei die Dichtsicke (10) derart ausgebildet ist, dass sie bei einer senkrecht zur Siegelebene (8) auf die Dichtsicke (10) wirkenden Kraftbeaufschlagung von bis zu 100 N nicht oder nur um maximal 0,2 Millimeter, bevorzugt um maximal 0,15 Millimeter, besonders bevorzugt um maximal 0,1 Millimeter und ganz besonders bevorzugt um maximal 0,05 Millimeter ihrer Höhe (18) senkrecht zur Siegelebene (8) deformiert wird.

8. System nach einem der vorhergehenden Ansprüche, wobei die Dichtsicke (10) auf ihrer halben Höhe (18) eine Breite zwischen 0,2 und 1 Millimeter, bevorzugt zwischen 0,3 und 0,8 Millimeter und besonders bevorzugt zwischen 0,4 und 0,6 Millimeter aufweist.

9. System nach einem der vorhergehenden Ansprüche, wobei die Dichtsicke (10) eine mittlere Materialstärke zwischen 0,05 und 0,3 Millimeter, bevorzugt zwischen 0,08 und 1,8 Millimeter, besonders bevorzugt zwischen 0,09 und 1,5 Millimeter und ganz besonders bevorzugt von im Wesentlichen 0,11 Millimetern umfasst.

10. System nach einem der vorhergehenden Ansprüche, wobei im radialen Querschnitt der umlaufenden Dichtsicke (10) der Übergangsbereich (15) einen geradlinigen Verbindungsbereich aufweist, welcher eine Breite von zwischen 0,3 bis 1,2 Millimeter, bevorzugt zwischen 0,3 bis 1,0 Millimeter und besonders bevorzugt zwischen 0,6 und 0,8 Millimeter aufweist.

11. System nach einem der vorhergehenden Ansprüche, wobei die Portionskapsel (1) einen sich parallel zur Siegelebene (8) erstreckenden Flanschbereich (19) zwischen dem Wulst (9) und der äußeren Flanke (12) aufweist und wobei die Portionskapsel (1) einen sich zwischen der inneren Flanke (11) und der Kapselwandung (7) erstreckenden Flanschzwischenbereich (20) aufweist, wobei der Flanschbereich (19) und der Flanschzwischenbereich (20) entlang einer zur Siegelebene (8) senkrechten Vertikalrichtung (Y) auf gleicher Höhe liegen.

12. System nach einem der vorhergehenden Ansprüche, wobei im radialen Querschnitt der Dichtsicke (10) die äußere Flanke (12) einen geradlinigen Flankenabschnitt (21) aufweist, der eine Länge zwischen 0,2 und 1 Millimeter, bevorzugt zwischen 0,3 und 0,6 Millimeter und besonders bevorzugt zwischen 0,4 und 0,5 Millimeter umfasst.

13. System nach einem der vorhergehenden Ansprüche, wobei im Randbereich (24) eine Dichtkontur zum dichtenden Eingriff mit der Dichtsicke (10) ausgebildet ist, wobei die Dichtkontur eine umlaufende Vertiefung (25) und eine benachbart zur Vertiefung (25) ausgebildete umlaufende Dichtnase (26) umfasst, wobei vorzugsweise die Vertiefung (25) in radialer Richtung (R) außerhalb der Dichtnase (26) angeordnet ist und wobei eine äußere Dichtnasenflanke (27) eine innere Wandung der Vertiefung (25) bildet.

14. System nach Anspruch 13, wobei in der geschlossenen Position die Dichtnase (26) in den Flanschzwischenbereich (20) und die Dichtsicke (10) in die Vertiefung (25) derart eingreifen, dass die Dichtnasenflanke (27) mit der inneren Flanke (11) in radialem Querschnitt einen Linien- oder Punktkontakt (28) ausbilden.

15. System nach Anspruch 14, wobei in der geschlossenen Position die Dichtsicke (10) durch die Dichtkontur nicht oder nur um maximal 30 %, bevorzugt um maximal 20 %, besonders bevorzugt um maximal 10 % und ganz besonders bevorzugt um maximal 5 % ihrer Höhe (18) senkrecht zur Siegelebene (8) deformiert wird.

## Claims

1. System for preparing a beverage, having a beverage-making machine (14) and a portion capsule (1), wherein the beverage-making machine (14) has a brewing unit with a first brewing-chamber part and a second brewing-chamber part, wherein the first and/or the second brewing-chamber part is movable relative to the other brewing-chamber part between an approached position, in which the first and second brewing-chamber parts form a closed brewing chamber (13), and an open position, in which the first and second brewing-chamber parts are spaced apart from one another for insertion or ejection of the portion capsule (1), wherein the first brewing-chamber part comprises a receiving element (22) for partially receiving the portion capsule (1) and the second brewing-chamber part comprises a closure element (23) for the receiving element, wherein, in the closed position, a flange (6) of the portion capsule (1) is received in a form-fitting and sealing manner between an edge region (24) of the receiving element (22) and the closure element (23), wherein the portion capsule (1) has a base element (2) with a cavity (3) for receiving a beverage raw material and has a capsule lid (4) which closes off the cavity (3), wherein the base element (2) comprises a capsule bottom (5), the encircling flange (6) and a capsule wall (7) which extends between the capsule bottom (5) and the encircling flange (6), wherein the capsule lid (4) is attached to a sealing plane (8) on the flange (6), wherein the flange (6) has an encircling bead (9) at its outer free end, wherein a sealing element in the form of a sealing embossment (10) which points away from the capsule lid (4) is provided on the flange (6), wherein the sealing plane (8) extends on the flange (6) on the side of the capsule lid (4) between the bead (9) and the sealing embossment (10), wherein the sealing embossment (10) comprises an inner flank (11) at the side of the capsule wall (7) and an outer flank (12) at the side of the bead (9), wherein the sealing embossment (10) is designed in such a way that, as the brewing chamber (13) is closed, said sealing embossment is deformed by at most 10% perpendicular to the sealing plane (8), wherein a transition region (15) extends between the inner flank (11) and the outer flank (12), wherein the transition region (15) has a transition plane (16) which extends parallel to the sealing plane (8) .

2. System according to Claim 1, wherein the sealing embossment (10) is designed in such a way that, as the brewing chamber (13) is closed, said sealing embossment is deformed by at most 5% perpendicular to the sealing plane (8).

3. System according to either of the preceding claims, wherein the sealing embossment (10) is designed in such a way that, in the event of an exertion of force of up to 100 N on the sealing embossment (10) perpendicular to the sealing plane (8), said sealing embossment is not deformed or is deformed only by at most 30%, preferably by at most 20%, particularly preferably by at most 10% and very particularly preferably by at most 5% of its height (18) perpendicular to the sealing plane (8).

4. System according to one of the preceding claims, wherein, in the radial cross section of the encircling sealing embossment (10), the inner flank (11) has a rectilinear contact region (17) which extends between the flange (6) and the transition region (15).

5. System according to Claim 4, wherein the rectilinear contact region (17) has a length of 0.1 to 1.5 millimetres, preferably of 0.1 to 0.8 millimetres, particularly preferably of 0.15 to 0.55 millimetres and very particularly preferably of 0.2 to 0.4 millimetres.

6. System according to one of the preceding claims, wherein the height (18) of the sealing embossment (10) perpendicular to the sealing plane (8) ranges between 0.2 and 1 millimetre, preferably between 0.3 and 0.6 millimetres and particularly preferably between 0.4 and 0.5 millimetres.

7. System according to Claim 6, wherein the sealing embossment (10) is designed in such a way that, in the event of an exertion of force of up to 100 N on the sealing embossment (10) perpendicular to the sealing plane (8), said sealing embossment is not deformed or is deformed only by at most 0.2 millimetres, preferably by at most 0.15 millimetres, particularly preferably by at most 0.1 millimetres and very particularly preferably by at most 0.05 millimetres of its height (18) perpendicular to the sealing plane (8).

8. System according to one of the preceding claims, wherein, at the middle of its height (18), the sealing embossment (10) has a width of between 0.2 and 1 millimetre, preferably of between 0.3 and 0.8 millimetres and particularly preferably of between 0.4 and 0.6 millimetres.

9. System according to one of the preceding claims, wherein the sealing embossment (10) has an average material thickness of between 0.05 and 0.3 millimetres, preferably of between 0.08 and 1.8 millimetres, particularly preferably of between 0.09 and 1.5 millimetres and very particularly preferably of substantially 0.11 millimetres.

10. System according to one of the preceding claims, wherein, in the radial cross section of the encircling sealing embossment (10), the transition region (15) has a rectilinear connecting region which has a width of between 0.3 and 1.2 millimetres, preferably of between 0.3 and 1.0 millimetres and particularly preferably of between 0.6 and 0.8 millimetres.

11. System according to one of the preceding claims, wherein the portion capsule (1) has a flange region (19), which extends parallel to the sealing plane (8), between the bead (9) and the outer flank (12), and wherein the portion capsule (1) has a flange intermediate region (20) which extends between the inner flank (11) and the capsule wall (7), wherein the flange region (19) and the flange intermediate region (20) are situated at the same height along a vertical direction (Y) perpendicular to the sealing plane (8).

12. System according to one of the preceding claims, wherein, in the radial cross section of the sealing embossment (10), the outer flank (12) has a rectilinear flank section (21) which comprises a length of between 0.2 and 1 millimetre, preferably of between 0.3 and 0.6 millimetres and particularly preferably of between 0.4 and 0.5 millimetres.

13. System according to one of the preceding claims, wherein, in the edge region (24), there is formed a sealing contour for sealing engagement with the sealing embossment (10), wherein the sealing contour comprises an encircling depression (25) and an encircling sealing lug (26) formed adjacent to the depression (25), wherein the depression (25) is preferably arranged outside the sealing lug (26) in a radial direction (R), and wherein an outer sealing-lug flank (27) forms an inner wall of the depression (25).

14. System according to Claim 13, wherein, in the closed position, the sealing lug (26) engages into the flange intermediate region (20) and the sealing embossment (10) engages into the depression (25) in such a way that the sealing-lug flank (27) together with the inner flank (11) form linear or punctiform contact (28) in radial cross section.

15. System according to Claim 14, wherein, in the closed position, the sealing embossment (10) is not deformed by the sealing contour or is deformed by the sealing contour only by at most 30%, preferably by at most 20%, particularly preferably by at most 10% and very particularly preferably by at most 5% of its height (18) perpendicular to the sealing plane (8).

## Revendications

1. Système pour la préparation d'une boisson présentant une machine de production de boissons (14) et une capsule dosette (1), dans lequel la machine de production de boissons (14) présente une unité d'infusion avec une première partie de chambre d'infusion et une deuxième partie de chambre d'infusion, dans lequel la première et/ou la deuxième partie de chambre d'infusion peut être déplacée par rapport à l'autre partie de chambre d'infusion entre une position rapprochée, dans laquelle la première et la deuxième partie de chambre d'infusion forment une chambre d'infusion fermée (13), et une position ouverte, dans laquelle la première et la deuxième partie de chambre d'infusion sont éloignées l'une de l'autre pour l'insertion ou l'éjection de la capsule dosette (1), dans lequel la première partie de chambre d'infusion comprend un élément de réception (22) pour la réception partielle de la capsule dosette (1) et la deuxième partie de chambre d'infusion comprend un élément de fermeture (23) pour l'élément de réception, dans lequel, dans la position fermée, une bride (6) de la capsule dosette (1) est reçue par complémentarité de forme et de manière étanche entre une zone de bord (24) de l'élément de réception (22) et l'élément de fermeture (23), dans lequel la capsule dosette (1) présente un élément de base (2) avec une cavité (3) pour recevoir une matière première de boisson et un couvercle de capsule (4) fermant la cavité (3), dans lequel l'élément de base (2) comprend un fond de capsule (5), la bride périphérique (6) et une paroi de capsule (7) s'étendant entre le fond de capsule (5) et la bride périphérique (6), dans lequel le couvercle de capsule (4) est fixé à la bride (6) au niveau d'un plan de scellement (8), dans lequel la bride (6) présente à son extrémité libre extérieure un bourrelet périphérique (9), dans lequel un élément d'étanchéité est prévu sur la bride (6) sous la forme d'une moulure d'étanchéité (10) orientée à l'opposé du couvercle de capsule (4), dans lequel le plan de scellement (8) s'étend sur la bride (6) du côté du couvercle de capsule (4) entre le bourrelet (9) et la moulure d'étanchéité (10), dans lequel la moulure d'étanchéité (10) comprend un flanc intérieur (11) du côté de la paroi de capsule (7) et un flanc extérieur (12) du côté du bourrelet (9), dans lequel la moulure d'étanchéité (10) est réalisée de telle sorte que, lors de la fermeture de la chambre d'infusion (13), elle est déformée de 10 % au maximum perpendiculairement au plan de scellement (8), dans lequel une zone de transition (15) s'étend entre le flanc intérieur (11) et le flanc extérieur (12), dans lequel la zone de transition (15) présente un plan de transition (16) s'étendant parallèlement au plan de scellement (8).

2. Système selon la revendication 1, dans lequel la moulure d'étanchéité (10) est réalisée de telle sorte que, lors de la fermeture de la chambre d'infusion (13), elle est déformée de 5 % au maximum perpendiculairement au plan de scellement (8).

3. Système selon l'une quelconque des revendications précédentes, dans lequel la moulure d'étanchéité (10) est réalisée de telle sorte que, lors de l'application d'une force de jusqu'à 100 N agissant sur la moulure d'étanchéité (10) perpendiculairement au plan de scellement (8), elle n'est pas déformée ou n'est déformée que de 30 % au maximum, de préférence de 20 % au maximum, de manière particulièrement préférée de 10 % au maximum et de manière tout particulièrement préférée de 5 % au maximum de sa hauteur (18) perpendiculairement au plan de scellement (8).

4. Système selon l'une quelconque des revendications précédentes, dans lequel, dans la section transversale radiale de la moulure d'étanchéité périphérique (10), le flanc intérieur (11) présente une zone de contact rectiligne (17) qui s'étend entre la bride (6) et la zone de transition (15).

5. Système selon la revendication 4, dans lequel la zone de contact rectiligne (17) présente une longueur de 0,1 à 1,5 millimètre, de préférence de 0,1 à 0,8 millimètre, de manière particulièrement préférée de 0,15 à 0,55 millimètre et de manière tout particulièrement préférée de 0,2 à 0,4 millimètre.

6. Système selon l'une quelconque des revendications précédentes, dans lequel la hauteur (18) de la moulure d'étanchéité (10) perpendiculairement au plan de scellement (8) est comprise entre 0,2 et 1 millimètre, de préférence entre 0,3 et 0,6 millimètre et de manière particulièrement préférée entre 0,4 et 0,5 millimètre.

7. Système selon la revendication 6, dans lequel la moulure d'étanchéité (10) est réalisée de telle sorte que, lors de l'application d'une force de jusqu'à 100 N agissant sur la moulure d'étanchéité (10) perpendiculairement au plan de scellement (8), elle n'est pas déformée ou n'est déformée que de 0,2 millimètre au maximum, de préférence de 0,15 millimètre au maximum, de manière particulièrement préférée de 0,1 millimètre au maximum et de manière tout particulièrement préférée de 0,05 millimètre au maximum de sa hauteur (18) perpendiculairement au plan de scellement (8).

8. Système selon l'une quelconque des revendications précédentes, dans lequel la moulure d'étanchéité (10) présente à sa mi-hauteur (18) une largeur d'entre 0,2 et 1 millimètre, de préférence d'entre 0,3 et 0,8 millimètre et de manière particulièrement préférée d'entre 0,4 et 0,6 millimètre.

9. Système selon l'une quelconque des revendications précédentes, dans lequel la moulure d'étanchéité (10) présente une épaisseur de matériau moyenne d'entre 0,05 et 0,3 millimètre, de préférence d'entre 0,08 et 1,8 millimètre, de manière particulièrement préférée d'entre 0,09 et 1,5 millimètre et de manière tout particulièrement préférée d'essentiellement 0,11 millimètre.

10. Système selon l'une quelconque des revendications précédentes, dans lequel, dans la section transversale radiale de la moulure d'étanchéité périphérique (10), la zone de transition (15) présente une zone de liaison rectiligne qui présente une largeur d'entre 0,3 à 1,2 millimètre, de préférence d'entre 0,3 à 1,0 millimètre et de manière particulièrement préférée d'entre 0,6 et 0,8 millimètre.

11. Système selon l'une quelconque des revendications précédentes, dans lequel la capsule dosette (1) présente une zone de bride (19) s'étendant parallèlement au plan de scellement (8) entre le bourrelet (9) et le flanc extérieur (12) et dans lequel la capsule dosette (1) présente une zone intermédiaire de bride (20) s'étendant entre le flanc intérieur (11) et la paroi de capsule (7), dans lequel la zone de bride (19) et la zone intermédiaire de bride (20) sont situées à la même hauteur le long d'une direction verticale (Y) perpendiculaire au plan de scellement (8).

12. Système selon l'une quelconque des revendications précédentes, dans lequel, dans la section transversale radiale de la moulure d'étanchéité (10), le flanc extérieur (12) présente une section de flanc rectiligne (21) qui présente une longueur d'entre 0,2 et 1 millimètre, de préférence d'entre 0,3 et 0,6 millimètre et de manière particulièrement préférée d'entre 0,4 et 0,5 millimètre.

13. Système selon l'une quelconque des revendications précédentes, dans lequel un contour d'étanchéité est réalisé dans la zone de bord (24) pour l'engagement étanche avec la moulure d'étanchéité (10), dans lequel le contour d'étanchéité comprend un renfoncement périphérique (25) et un nez d'étanchéité périphérique (26) réalisé au voisinage du renfoncement (25), dans lequel de préférence le renfoncement (25) est agencé dans la direction radiale (R) à l'extérieur du nez d'étanchéité (26) et dans lequel un flanc de nez d'étanchéité extérieur (27) forme une paroi intérieure du renfoncement (25).

14. Système selon la revendication 13, dans lequel, dans la position fermée, le nez d'étanchéité (26) s'engage dans la zone intermédiaire de bride (20) et la moulure d'étanchéité (10) s'engage dans le renfoncement (25) de telle sorte que le flanc de nez d'étanchéité (27) réalise un contact linéaire ou ponctuel (28) avec le flanc intérieur (11) dans la section transversale radiale.

15. Système selon la revendication 14, dans lequel, dans la position fermée, la moulure d'étanchéité (10) n'est pas déformée par le contour d'étanchéité ou n'est déformée que de 30 % maximum, de préférence de 20 % maximum, de manière particulièrement préférée de 10 % maximum et de manière tout particulièrement préférée de 5 % maximum de sa hauteur (18) perpendiculairement au plan de scellement (8).
